# EUROPEAN PATENT APPLICATION

(11) **EP 4 495 415 A1**
(43) Date of publication of application: **22.01.2025**
(21) Application number: 23185929.9
(22) Date of filing: 17.07.2023
(51) Int. Cl.: F03D 1/06, F03D 80/30

(54) **SPAR CAP STRUCTURES COMPRISING GLASS FIBER STACKS WITH CONDUCTIVE ELEMENTS**

(71) Applicant: LM Wind Power A/S, 6000 Kolding (DK)
(72) Inventor: NIELSEN, Lars, 6000 KOLDING (DK); KILDEGAARD, Casper, 6000 KOLDING (DK)
(74) Representative: ZBM Patents - Zea, Barlocci & Markvardsen

(57) **Abstract**

In a first aspect, a spar cap structure for a wind turbine blade is provided. The spar cap structure comprises a carbon fiber stack and a glass fiber stack. The carbon fiber stack comprises a plurality of layers of one or more carbon fiber components arranged one on top of the other forming rows of layers of one or more carbon fiber components and one or more conductive veils arranged between two consecutive rows of the layers of one or more carbon fiber components. The glass fiber stack comprises one or more layers of one or more glass fiber components, and conductive elements electrically connected to the conductive veils of the carbon fiber stack. The glass fiber stack is configured to accommodate a lightning receptor to be electrically connected to the conductive elements. Furthermore, the one or more conductive veils and the conductive elements are at least partially overlapped. In a further aspect, a wind turbine blade comprising one or more spar cap structures according to any of the examples herein is provided. In yet a further aspect, a method for manufacturing a spar cap structure and a wind turbine blade according to any of the examples herein is provided.

## Description

The present disclosure relates to spar cap structures comprising glass fiber stacks with conductive elements, wind turbine blades comprising the spar cap structures, and methods for manufacturing these spar cap structures and these wind turbine blades.

### BACKGROUND

Modern wind turbines are commonly used to supply electricity to the electrical grid. Wind turbines of this kind generally comprise a rotor with a rotor hub and a plurality of wind turbine blades. The rotor is set into rotation under the influence of the wind on the blades. The rotation of the rotor shaft drives the generator rotor either directly ("directly driven") or through the use of a gearbox. The gearbox (if present), the generator, and other systems are usually mounted in a nacelle on top of a wind turbine tower.

Wind turbine blades are generally made from fiber-reinforced polymers or plastics (FRP's), which are composite materials consisting of a polymer matrix and reinforced with fibers. The fibers are usually glass or carbon and provide longitudinal stiffness and strength.

Wind turbine blades are commonly manufactured by joining two blade shell parts made from fiber-reinforced polymers, e.g. glass or carbon fiber reinforced polymers. These blade shell parts may be molded using a resin infusion technology or a prepreg technology. In resin infusion technology, fibers are placed in a mold and then, the resin is injected into the mold cavity under pressure. This resin fills the volume between the cavity, and then, the resin is cured or hardened. Examples of resin infusion technology may be Resin Transfer Molding (RTM) or Vacuum Assisted Resin Transfer Molding (VARTM). In VARTM, the resin is injected under a vacuum or pressure lower than atmospheric.

A load-carrying structure may be arranged between the pressure side blade shell part and the suction side blade shell part. The load-carrying structure may comprise a reinforcing structure joined to opposing spar caps of the respective blade shell part. The spar caps may be embedded within the composite laminate materials of the blade shell parts or laminated to an inner surface of the blade shell. The spar caps are used to receive the reinforcing structure, e.g. a pair of opposing flanges, and to structurally reinforce the wind turbine blade. The spar caps provided in the blade shell parts typically increase the stiffness, buckling resistance, and strength of the wind turbine blade. The spar caps extend along a longitudinal length of the wind turbine blade.

Spar caps may be constructed of various materials, including glass fiber laminate composites and carbon fiber laminate composites. For example, glass fiber fabrics or carbon fiber fabrics may be employed for manufacturing spar caps. In order to increase the mechanical properties, pultruded composites may alternatively be used. Pultruded composites or pultrusions are fiber reinforcement materials that are impregnated with resin and pulled through a heated stationary die such that the resin cures and undergoes polymerization. Pultruded composites may comprise carbon fiber pultrusions and/or glass fiber pultrusions. As such, the pultrusion process is typically characterized by a continuous process that produces composite parts having a constant cross-section. Thus, a plurality of pultrusions can be vacuum infused together in a mold to form the spar caps. The pultrusions are prefabricated which allows for a high quality level of and better fiber configuration and homogeneity.

In recent times, there has been a trend to increase the size of wind turbine blades to capture more wind. Larger blades typically involve higher mechanical requirements. Furthermore, manufacturing complexity also increases with larger blades. Carbon fibers, e.g. carbon fiber pultrusions, offer a better stiffness/weight ratio and fatigue properties than glass fibers, e.g. glass fiber pultrusions. Accordingly, carbon fibers, e.g. carbon fiber pultrusions, may be used to achieve these high mechanical requirements.

Furthermore, as wind turbine blades increase in size, the risk of lightning striking the wind turbine blades increases. Wind turbine blades may be provided with lightning receptors to capture the lightning strike. These lightning receptors are electrically connected to a down conductor arranged within the wind turbine blade to conduct the lightning current to the ground.

The electrical conductivity of carbon fibers is greater than that of glass fibers. Lightning striking carbon fibers may cause the carbon fiber to conduct the lightning current. However, the resin that bonds carbon fiber layers, e.g. several carbon fibers pultrusions, comprises a lower electrical conductivity. Accordingly, the resin and any gap between the carbon fiber layers may hinder the lightning current from flowing between carbon fibers layers, e.g. carbon fiber pultrusions. This may cause a risk of internal flashover between carbon fibers layers which may potentially damage the material. To this end, thin conductive veils may be provided between carbon fiber layers, e.g. between carbon fiber pultrusions. These thin conductive veils comprise an electrical conductivity greater than that of the resin. These conductive veils may be electrically connected to the down conductor.

The high stiffness/weight ratio of the carbon fiber, e.g. of the carbon pultrusions, does not allow subsequent machining, e.g. an abrupt stop of the unidirectional fiber, since cracks quickly propagate from holes or apertures performed in carbon fibers, e.g. in the unidirectional carbon fibers of the carbon fiber pultrusions. Furthermore, cutting tools for machining carbon fibers are subjected to great wear and are highly power-consuming. For these reasons, carbon fibers are not machined for subsequent mounting lightning receptors. As a result, the lightning receptors are inserted in the glass fiber, e.g. in core structures adjacent to the spar cap structures.

Mounting these lightning receptors in the core structures and connecting them to the conductive veils arranged between the carbon fiber layers, e.g. carbon fiber pultrusions, of the spar cap is complex and requires several components. Copper components are generally at least partially arranged on the inner side of the core structures, i.e. sticking out from the spar cap. Some of these copper elements may be used for connecting the conductive veils to the down conductor. These copper elements are generally arranged on the inner side of the blade shell and apart from the spar cap.

For example, structures known as lightning protection ears may be made from copper meshes. These lightning protection ears may stick out from the spar cap and may be arranged on the inner side of the core structure. Using these lightning protection ears may involve the use of interconnecting cables connected to the lightning protection ears through copper discs bonded to the lightning protection ears. These interconnecting cables may connect the lightning protection ears to the down conductor.

The conductive veils may be bonded to the copper mesh after manufacturing the spar cap. These copper meshes may get damaged or disconnected from the spar cap when the spar cap is transferred from the spar cap mold to the blade shell mold.

Furthermore, aligning these copper meshes with the shell, e.g. core structure, is difficult. In addition, since the copper mesh or lightning protection ears are on the inner side of the core structure, damages and misalignments of the copper mesh or of the lightning protection system are difficult to detect by inspecting from outside the wind turbine blade, e.g. through an ultrasonic inspection. Furthermore, the adhesion between the lightning protection ears or the copper meshes with the blade shell is generally poor. The adhesion of the copper disc and the copper mesh is also generally poor.

In other examples, the copper components are arranged inside the core structure. Mounting these components, on the core structure, requires precise machining. These operations are thus complex and time-consuming. Furthermore, machining the core structure for placing the copper components and the lightning receptor of the lightning protection system may weaken the core structure. The structural integrity of the wind turbine blade may thus be negatively affected. In these examples, the connection between the conductive veils and the copper components is also complex. The adhesion of the copper components and the core structure may also be poor.

The present disclosure provides examples of systems and methods that at least partially resolve some of the aforementioned disadvantages.

### SUMMARY

In a first aspect, a spar cap structure for a wind a turbine blade is provided. The spar cap structure comprises a carbon fiber stack and a glass fiber stack.

The carbon fiber stack comprises a plurality of layers of one or more carbon fiber components arranged one on top of the other forming rows of layers of the carbon fiber components. The carbon fiber stack further comprises one or more conductive veils arranged between two consecutive rows of layers of carbon fiber components.

The glass fiber stack comprises one or more layers of one or more glass fiber components, and conductive elements electrically connected to the conductive veils of the carbon fiber stack. The glass fiber stack is configured to accommodate a lightning receptor to be electrically connected to the conductive elements.

According to this aspect, the lightning receptors to capture a potential strike of lightning may be mounted in the glass fiber stack of the spar cap structure. As the stiffness of glass fibers is lower than that of carbon fibers, the wear of cutting tools for machining glass fibers is significantly lesser than for machining carbon fibers. Equipment required for performing machining operations in glass fibers may be simplified and power consumption may be reduced. Safety risks of machining glass fibers are additionally reduced. Accordingly, machining layers of one or more glass fiber components may be simpler than machining layers of one or more carbon fiber components.

Machining fibers may comprise forming perforations or holes in the fibers. The reduced stiffness and lower stress of the layers of one or more glass fiber components, when compared with layers of one or more carbon fiber components are more tolerant to damage upon perforations. This greater damage tolerance of glass fiber components may reduce the propagation of cracks from a hole performed in glass fiber components. Perforations or holes may be drilled in the glass fiber stack of the spar cap. An aperture may thus be performed through the whole first glass fiber stack in an easy manner. A lightning receptor may thus be inserted through such an aperture drilled in the glass fiber stack.

The combination of carbon fiber stack and glass fiber stack in the spar cap structure allows for obtaining acceptable mechanical properties and increases the flexibility for mounting lightning receptors at different locations along the lengthwise direction of the wind turbine blade. Perforating the core structure of the wind turbine blade for inserting lightning receptors may thus be prevented. The risk of crack propagation along the core structure may thus be significantly reduced. As a result, the structural integrity of the wind turbine blade may be improved.

In addition, lightning components may be integrated within the spar cap. Consequently, the accuracy and precision of the manufacturing operations may be increased. Furthermore, handling operations for placing the spar cap in the blade shell mold may be simplified. De-attaching the lightning components from the blade shell, e.g. from the spar cap or from the core structure may further be prevented.

Furthermore, since the conductive veils arranged between the carbon fiber pultrusions and the conductive elements of the glass fiber stack forms part of the spar cap structure, the electrical connection between the conductive veils of the carbon fiber stack and the conductive elements of the glass fiber stack can be easily performed. The conductive veils of the carbon fiber stack may thus be electrically connected to the down conductor of the wind turbine blade through the conductive elements of the glass fiber stack and/or through the lightning receptor in a simple manner. The electrical connection between the conductive veils of the carbon fiber stack and the conductive elements of the glass fiber stack may thus be performed before forming the whole wind turbine blade. This allows for reducing the number of elements and prevents performing some post-operation tasks, such as machining the blade shell to mount the typical copper disc and soldering the conductive veils arranged between the carbon fiber pultrusions to the copper disc.

In addition, maintenance and repair operations of the lightning protection system, e.g. repairing connections of the lightning receptor with the conductive veils of the carbon fiber stack, may be easily performed from outside the wind turbine blade by perforating the glass fiber stack. Providing the glass fiber stack in the spar cap structure may thus allow for repairing wind turbine blades in a simplified manner.

In this disclosure, a glass fiber stack refers to a stack comprising one or more layers of one or more glass fiber components, and each of these layers is arranged on top of each other. The glass fiber stack is mainly formed by layers of one or more glass fiber components. The glass fiber stack may also comprise a minimum amount of fibers made from other types of fibers or other components but in an amount that does not impede perforating the entire thickness of the glass fiber stack. The layers of glass fiber components may be made from glass fiber fabrics or from glass fiber pultrusions. For example, each layer of one or more glass fiber components may be made from a glass fiber pultrusion. The glass fiber components may thus be glass fiber pultrusions or glass fiber fabrics.

In this disclosure, a conductive veil arranged in the carbon fiber stack shall be understood as a thin conductive veil made from a conductive material having an electrical conductivity greater than the electrical conductivity of the resin arranged between the layers to potentially equalize two consecutive layers of carbon fiber components. The conductive veil of the carbon fiber stack has the shape of a ply, a foil, or mesh. The conductive veil may comprise carbon fibers arranged in a biaxial arrangement, metal wires and a combination of them.

Accordingly, the present disclosure aims at providing spar cap structures with the combination of the high mechanical properties of the layers of one or more carbon fiber components that provides stiffness with the low mechanical properties of the layers of one or more glass fiber components that allow apertures to be drilled for mounting lightning receptors and simplifying the installation of the lightning protection system in wind turbine blades.

In a further aspect, a wind turbine blade extending in a lengthwise direction is provided. The wind turbine blade comprises an upper blade shell part and a lower blade shell part joined to the upper blade shell part. The wind turbine blade further comprises a reinforcing structure between the upper blade shell part and the lower blade shell. In addition, the upper blade shell part and/or the lower blade shell part comprises a spar cap structure according to any of the examples herein disclosed.

In yet a further aspect, a method for manufacturing a spar cap structure is provided. The method for manufacturing a spar cap structure comprises forming a carbon fiber stack and a glass fiber stack.

Forming a carbon fiber stack comprises stacking a plurality of layers of one or more carbon fiber components to form rows of layers of carbon fiber components, and arranging a conductive veil between two consecutive rows of layers of carbon fiber components.

The method further comprises arranging one or more layers of one or more glass fiber components, and conductive elements adjacent to the carbon fiber stack. The glass fiber stack is configured to accommodate a lightning receptor to be electrically connected to the conductive elements.

The method further comprises electrically connecting the conductive elements of the glass fiber stack to the conductive veils of the carbon fiber stack, and bonding the glass fiber stack and the carbon fiber stack.

In yet a further aspect, a method for manufacturing a wind turbine blade according to any of the examples herein disclosed is provided. The method for manufacturing a wind turbine blade comprises forming the upper blade shell part and the lower blade shell.

Forming the upper blade shell part and/or the lower blade shell part comprises arranging the spar cap structure on an outer layer laid in a blade shell part mold, and bonding the spar cap structure to the outer layer.

The method for manufacturing the wind turbine blade further comprises joining the reinforcing structure to the upper blade shell part and to the lower blade shell part such that the reinforcing structure is arranged between the upper blade shell part and the lower blade shell part, and joining the upper blade shell part to the lower blade shell part.

Advantages derived from these aspects may be similar to those mentioned regarding the first aspect.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 shows a perspective view of a wind turbine blade according to one example;
Figure 3 shows a cross-sectional view of a wind turbine blade according to one example of the present disclosure;
Figure 4A schematically represents a cross-sectional view of a spar cap structure arranged in a wind turbine blade according to an example of the present disclosure;
Figure 4B schematically represents the cross-sectional view of the spar cap structure of Figure 4A accommodating a lightning receptor;
Figure 5 schematically represents a cross-sectional view of a portion of a spar cap structure accommodating a lightning receptor according to an example of the present disclosure;
Figures 6A - 6C respectively represent a cross-sectional view of a glass fiber pultrusion according to an example of the present disclosure;
Figures 7A - 7C respectively represent a cross-sectional view of a portion of the wind turbine blade according to an example of the present disclosure;
Figure 7D schematically represents a zoomed-in view of the connection of the plug element with the upper down conductor branch 410 of Figure 7A;
Figure 8 is a block diagram of a method for manufacturing a spar cap structure according to one example of the present disclosure; and
Figure 9 is a block diagram of a method for manufacturing a wind turbine blade according to one example of the present disclosure;

### DETAILED DESCRIPTION OF EXAMPLES

In these Figures, the same reference signs have been used to designate matching elements.

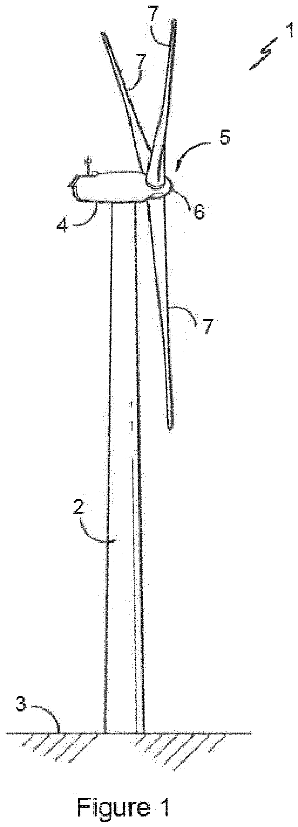

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one wind turbine blade 7 coupled to and extending outwardly from the rotor hub 6. For example, in the illustrated example, the rotor 5 includes three wind turbine blades 7. However, in an alternative example, the rotor 5 may include more or less than three blades 7. Each wind turbine blade 7 may be spaced from the rotor hub 6 to facilitate rotating the rotor 5 to enable kinetic energy to be transferred from the wind into usable mechanical energy, and subsequently, electrical energy. For instance, the rotor hub 6 may be rotatably coupled to an electric generator positioned within the nacelle 4 or forming part of the nacelle to permit electrical energy to be produced.

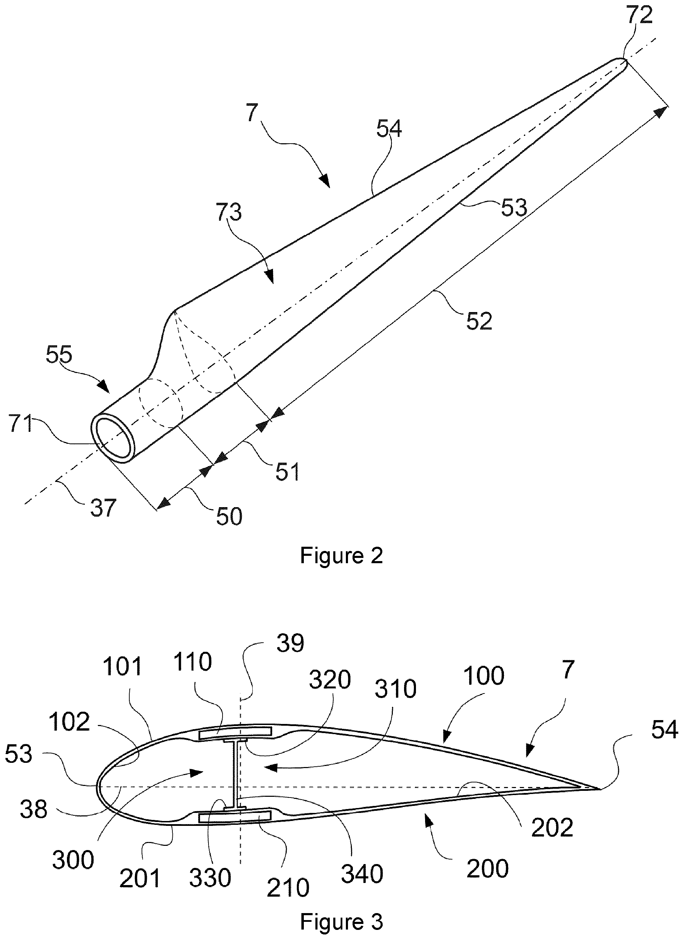

Figure 2 illustrates an example of a wind turbine blade 7. The wind turbine blade 7 extends in a longitudinal direction or lengthwise direction 37 from a blade root end 71 to a blade tip end 72. The blade 7 comprises a blade root region or portion 50 closest to the rotor hub, a profiled or an airfoil portion 52 furthest away from the rotor hub and a transition portion 51 between the blade root portion 50 and the airfoil portion 52. The blade 7 comprises a leading edge 53 facing the direction of rotation of the blade 7 when mounted on the rotor hub, and a trailing edge 54 facing the opposite direction of the leading edge 53.

The airfoil portion 52 has a shape designed to generate lift, whereas the blade root portion 50 has a circular or elliptical cross-section for structural considerations and easy mounting of the blade to the rotor hub. The diameter or the chord of the blade root portion 50 may be constant along the entire blade root portion 50. At the transition portion 51, the profile gradually changes from the circular or elliptical cross-section of the blade root portion 50 to the airfoil profile of the airfoil portion 52. The wind turbine blade 7 may be connected to the rotor hub through a blade root attachment portion 55.

The wind turbine blade 7 comprises a blade shell 73. The blade shell 73 comprises an outer side or surface that defines the external shape of the blade, e.g. the outer shape at the blade root portion and the outer shape at the airfoil portion. The blade shell 73 also comprises an inner side or surface that defines the internal volume of the blade and faces a load-carrying structure (not shown). The blade shell 73 may be made of fiber-reinforced polymer or plastics, e.g. glass fiber and/or carbon fiber.

The blade shell may be formed by a plurality of blade shell parts. The plurality of blade shell parts may be joined together to form the blade shell. The blade shell parts may be formed and then joined according to any of the examples herein disclosed. Resin infusion technology, e.g. RTM or VARTM, or prepreg technology may be used for manufacturing the blade shell parts.

In some examples, the blade shell comprises a lower side blade shell part and an upper blade shell part. The lower side blade shell may be a pressure side blade shell part. The upper blade shell part may be a suction side blade shell part. The lower side blade shell part may be joined to the upper side blade shell part along joining lines along the leading edge 53 and the trailing edge 54. Each of these blade shell parts may be manufactured in a mold and then joined together to define the entire blade shell of the wind turbine blade 7. A reinforcing structure is arranged between the lower side blade shell part and the upper side blade shell part.

Figure 3 shows a cross-sectional view of a wind turbine blade 7 according to one example of the present disclosure. A suction side blade shell part or upper blade shell part 100, and a pressure side blade shell part or lower blade shell part 200 extend from the leading edge 53 to the trailing edge 54. The wind turbine blade 7 further comprises a chord line 38 between the leading edge 53 and the trailing edge 54. The chord line 38 extends in an edgewise direction or chordwise direction. A flapwise direction 39 is substantially perpendicular to the chord line 38. The upper blade shell part 100 and the lower blade shell part 200 are joined, e.g. bonded, together along the leading edge 53 and the trailing edge 54.

The upper blade shell part 100 comprises an upper outer layer 101 and an upper inner layer 102. The upper outer layer 101 defines an outer shape of the upper blade shell part 100 and the upper inner layer 102 defines an inner shape of the upper blade shell part 100. The upper outer layer 101 and the upper inner layer 102 may comprise glass fiber laminates. For example, one or more glass fiber laminates may be arranged to form the upper outer layer 101 and/or the upper inner layer 102. The fibers, e.g. glass fibers may be oriented bidirectionally to enhance the torsional stiffness of the blade 7. In other examples, the fibers may be arranged unidirectionally. In further examples, the upper layers 101 and/or 102 comprise laminates with unidirectional fibers and laminates with bidirectional fibers.

The upper blade shell part 100 of this example comprises an upper spar cap structure 110 embedded between the upper outer layer 101 and the upper inner layer 102. The upper spar cap structure 110 is thus arranged between the upper outer layer 101 and the upper inner layer 102. The upper spar cap structure 110 structurally reinforces the upper blade shell part 100.

A core structure may be arranged between the upper outer layer 101 and the upper inner layer 102 in some parts of the upper blade shell part 100. For example, a core structure may extend a portion between the upper spar cap structure 110 and the leading edge. Additionally, or alternatively, a core structure may extend a portion between the upper spar cap structure 110 and the trailing edge 54. The core structure generally increases the thickness of the blade shell part so as to improve the stiffness without an excessive weight increase. The core structure may be made from a lightweight material such as balsa wood or polymer foam.

The lower blade shell part 200 may be manufactured like the upper blade shell part 100. As described with respect to the upper blade shell part 100, the lower blade shell part 200 comprises a lower outer layer 201 and a lower inner layer 202. The lower outer layer 201 and/or the lower inner layer 202 may comprise bidirectional glass fibers. A lower spar cap structure 210 is embedded between the lower outer layer 201 and the lower inner layer 202.

The upper spar cap structure 110 and the lower spar cap structure 210 of this example cross the flapwise direction 39. The spar cap structures 110 and 210 faces each other. The spar cap structures 110 and 210 may extend a length along the spanwise direction 37 of the wind turbine blade. The length of the spar cap structures may be greater than 90% of the entire length of the wind turbine blade.

The spar cap structures 110 and 210 may be according to any of the herein examples. In this example, the spar cap structures comprise a carbon fiber stack and a glass fiber stack. In some examples, the carbon fiber stack may comprise a plurality of carbon fiber pultrusions. Alternatively, the carbon fiber stack may comprise carbon fiber fabrics. The carbon fiber fabrics and the carbon fiber pultrusions may be arranged to form layers of carbon fiber components. The carbon fiber stack further comprises conductive veils or foils arranged between the layers of carbon fiber components. The glass fiber stack comprises one or more layers of one or more glass fiber components. The glass fiber stack further comprises conductive elements. The conductive elements may be metal conductive elements. The layers of one or more glass fiber components may be formed by glass fiber pultrusions or by glass fiber fabrics. The conductive veils or foils are electrically coupled to the conductive elements to create a conductive path from the carbon fiber stack to the glass fiber stack. The conductive veils of the carbon fiber stack and the conductive elements of the glass fiber stack may be at least partially overlapped. The conductive veils and the conductive elements may thus be in contact to create an electric conductive path.

The spar cap structures 110 and 210 may be prefabricated. The glass fiber stack and the carbon fiber stacks may be bonded together, e.g. infused together, before being placed on the blade shell mold for manufacturing the corresponding blade shell part. Prefabricating the spar cap structures 110 and 210 simplifies the electrical connection between the conductive veils of the carbon fiber stacks and the conductive elements of the glass fiber stack. For example, the conductive veils may be easily placed to partially overlap the conductive elements of the glass fiber stack.

Although not shown in this figure, a lightning receptor may be inserted in the glass fiber stack to be electrically connected to the conductive elements arranged in the glass fiber stack.

The wind turbine blade 7 comprises a reinforcing structure 300 arranged between the upper blade shell part 100 and the lower blade shell part 200. The reinforcing structure 300 provides stiffness to the wind turbine blade. The reinforcing structure 300 comprises a first reinforcing beam 310 arranged between the upper spar cap structure 110 and the lower spar cap structure 210. In further examples, the reinforcing structure comprises a first reinforcing beam and a second reinforcing beam.

The first reinforcing beam 310 of this example extends a length along the spanwise direction 37. The first reinforcing beam 310 may substantially extend between the root portion and the tip portion. The length of the first reinforcing beam 310 may correspond to the length of the spar cap structures 110 and 210.

The first reinforcing beam 310 comprises a web 340 extending between an upper flange 320 and a lower flange 330. The upper flange 320 of the first reinforcing beam 310 is joined to the upper blade shell part 100. The upper flange 320 is joined, e.g. bonded, to the upper inner layer 102 at the region of the upper spar cap structure 110. Similarly, the lower flange 330 is joined to the lower inner layer 202 at the region of the lower spar cap structure 210. In this example, the first reinforcing beam 310 and the spar cap structures 110 and 210 form the load-carrying structure of the wind turbine blade that serves to withstand loads applied to the wind turbine blade.

In this example, the first reinforcing beam 310 comprises a single web. However, in other examples, the first reinforcing beam 310 may comprise two webs extending between the flanges 320 and 330. This configuration may be generally known as a spar box configuration.

An adhesive layer may be arranged between the flanges 320 and 330 and the corresponding inner layer 102 and 202. The adhesive layers join the flanges 320 and 330 to the blade shell parts 100 and 200. The first reinforcing beam 310 may thus be bonded to the upper blade shell part 100 and to the lower blade shell part 200. The spar cap structures 110, 210 are arranged between the corresponding flanges 320, 330 and the outer layer 101, 201.

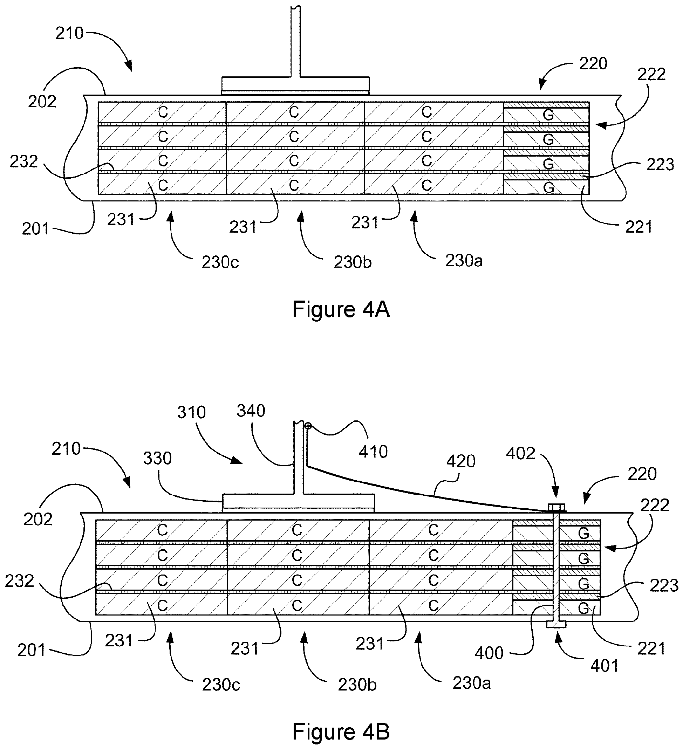

Figure 4A schematically represents a cross-sectional view of a spar cap structure 210 arranged in a wind turbine blade according to an example of the present disclosure. This figure shows a spar cap structure arranged in the lower blade shell part (a lower spar cap), however, the spar cap arranged within the upper blade shell part (an upper lower spar cap) may be according to any example of lower spar caps herein disclosed.

In this example, the spar cap structure 210 is arranged between the lower outer layer 201 and the lower inner layer 202. The spar cap structure 210 comprises a plurality of layers. In this example, the layers are formed by pultrusions 231 and 221 arranged in stacks. In other examples, the layers may be formed by directly placing fibers, e.g. in the form of fabrics. The pultrusions of this example are plates. The width of the pultrusion plates is several times its thickness, for example, greater than ten times. In some examples, the pultrusion plates comprise a width between 20 mm and 300 mm and a thickness between 1 mm and 6 mm, e.g. 5 mm. In other examples, the pultrusions comprise other suitable cross-sectional shapes, e.g. a rectangular cross-section.

The spar cap structure 210 of this figure comprises a plurality of carbon fiber stacks 230a, 230b and 230c. The carbon fiber stacks 230a, 230b and 230c are arranged side-by-side, i.e. next to each other. The carbon fiber stacks 230a, 230b and 230c comprise a plurality of pultrusions 231 arranged one on top of the other. In this example, the carbon fiber stacks 230a, 230b and 230c are formed by four carbon fiber pultrusions 231. In some examples, the number of carbon fiber pultrusions 231 may vary along the spanwise direction 37 of the blade. The carbon fiber stacks 230 may comprise any suitable number of carbon fiber pultrusions.

In other examples, the carbon fiber stack may comprise a plurality of carbon fiber fabrics arranged one on the other forming rows of carbon fiber fabrics. In these examples, the spar cap may comprise a single carbon fiber stack made from a plurality of layers, each of these layers comprising carbon fiber fabrics.

In some examples, the plurality of carbon fiber stacks 230 extends in a direction parallel to the spanwise or lengthwise direction 37 of the wind turbine blade along a length of the corresponding spar cap structure 210. In some examples, the length of the pultrusions forming one stack varies along the spanwise direction so as to form a stepwise configuration. In further examples, some pultrusions of one stack may extend the entire length of the spar cap structure.

The carbon fiber stacks 230a, 230b and 230c of this example are made from carbon fiber pultrusions 231. The carbon fibers of these pultrusions are arranged in a unidirectional configuration. In other examples, the stacks 230a, 230b and 230c may comprise carbon fiber pultrusions and other types of fiber pultrusions, e.g. glass fiber pultrusions and/or aramid fiber pultrusions.

The carbon fiber stacks 230a, 230b and 230c further comprise a conductive veil 232 arranged between two consecutive rows of pultrusions. The conductive veil 232 may extend at least the width of the plurality of carbon fiber stacks 230a, 230b and 230c. In this example, the conductive veils 232 extend from the carbon fiber stacks to the glass fiber stack 220. In some examples, the conductive veil 232 comprises a thickness of less than 0,5 mm, e.g. 0,05 mm and 0,45 mm. The conductive veil 232 may comprise carbon fibers and/or metal, e.g. copper and/or steel. In some examples, the conductive veil 232 comprises carbon fibers arranged in a biaxial configuration. Additionally, or alternatively, the conductive veil 232 may comprise copper filaments.

In this example, each conductive veil 232 is sandwiched between two consecutive carbon fiber pultrusions. In some examples, a conductive veil 232 may also be arranged on top and/or on the bottom of the carbon fiber stacks.

The spar cap structure 210 further comprises a glass fiber stack 220. In other examples, the spar cap structure may comprise a plurality of glass fiber stacks. The glass fiber stack comprises one or more layers, each of them comprising one or more glass fiber components. The layers may comprise pultrusions or fabrics. The glass fiber stack 220 of this example comprises a plurality of glass fiber pultrusions 221 arranged one on top of the other. In this example, the glass fiber stack 220 comprises four glass fiber pultrusions 221; however, in other examples, any suitable number of glass fiber pultrusions may be provided.

In this example, all the pultrusions of the glass fiber stack 220 are glass fiber pultrusions 221. The glass fiber stack of this example is thus free from non-glass fiber pultrusions. However, in other examples, glass fiber stack may also comprise a small number of pultrusions made from a different fiber material, e.g. aramid fiber pultrusions. In this example, the volume of these different fiber pultrusions when compared to the total volume of the glass fiber stack is thus smaller than 10%, optionally smaller than 5%. The volume of pultrusions made from other types of fibers is thus relatively low when compared with the volume of glass fiber pultrusions. In some examples, this very low volume of non-glass pultrusions within the glass pultrusion stack does not totally impede perforating the entire thickness of the glass fiber stack. As the damage tolerance of glass fiber pultrusions is greater than that of the carbon fiber pultrusions, the probability of breaking upon perforation of these glass fiber stacks mainly formed by glass fiber pultrusions is smaller than in stacks entirely formed by carbon fiber pultrusions. This greater damage tolerance and lower probability of breaking may thus allow perforating the glass fiber stack for arranging the lightning receptor.

In some examples, the glass fiber stack 220 may comprise an electrical insulator component arranged between the glass fiber pultrusions 221 and the outer layer 201. This electrical insulator component may comprise foam. The electrical insulator component may improve the insulation of the glass fiber stack 220 with respect to the outside of the wind turbine blade.

The volume of carbon fibers in the spar cap 210 may be greater than the volume of glass fibers. In this example, the volume of carbon fiber pultrusions 231 in the spar cap structure 210 is greater than the volume of glass fiber pultrusions 221. Accordingly, higher mechanical properties may be achieved. In this example, the ratio of the volume of the carbon fiber pultrusions to the volume of glass fiber pultrusions is greater than 2. Or in other words, the volume of carbon fiber pultrusions is double that of glass fiber pultrusions. The amount of carbon fibers is thus greater than the amount of glass fibers.

The glass fiber stack 220 comprises conductive elements 222. The conductive elements 222 may be metal conductive elements. In other examples, the conductive elements may comprise another suitable conductive material. In this example, the conductive elements 222 comprise metal conductive layers 223. The glass fiber stack 220 of this example comprises metal conductive layers 223 arranged between two consecutive glass fiber pultrusions 221. The metal conductive elements may comprise e.g. copper and/or steel. In this example, each metal conductive layer 223 is connected to one of the conductive veils 232. Each metal conductive layer 223 and the corresponding conductive veil 232 are partially overlapped.

In some examples, the conductive elements 222 may extend in a direction parallel to the lengthwise direction 37. The conductive elements 222 may extend the entire length of the glass fiber stack 220, e.g. the entire length of the spar cap structure 210.

In other examples, the conductive elements 222 are discontinuous in the lengthwise direction 37.

In some examples, the metal conductive layers 223 may be integrated with the glass fiber pultrusions 221. In these examples, the glass fiber pultrusions 221 comprises a pultruded glass fiber portion and a metal conductive layer 223.

The glass fiber stack 220 is arranged adjacent to the carbon fiber stack 230a. One side of the carbon fiber stack 230a is in contact with one side of the glass fiber stack 220. The conductive veils 232 and the conductive elements 222 of this example are at least partially overlapped. In this example, the conductive veils 232 extend towards the glass fiber stack 220. In this example, the conductive veils 232 comprise a connecting portion extending towards the glass fiber stack 220. In this example, the connecting portion of each conductive veil 232 overlaps a I conductive element 222. The conductive veils 232 of this example cover the entire width of the conductive elements 222, e.g. the width of the metal conductive layers 223. In this example, a conductive veil 232 is arranged on the outer carbon fiber pultrusions of the carbon fiber stacks 230a, 230b, 230c and on the outer metal conductive layer 223. Similarly, conductive veils 232 are arranged between carbon fiber pultrusions and extend towards the glass fiber stack. The connecting portion of these conductive veils 232 are thus arranged between two layers of glass fiber components. The conductive veils 232 and the corresponding metal conductive layers 223 are thus in contact. An electrical path may thus be established between the corresponding conductive veil 232 of the carbon fiber stacks 230a, 230b and 230c and the metal conductive layer 223.

In this example, the conductive veils 232 comprise the width of the spar cap. In other examples, the connecting portion of the conductive veil 232 may extend a portion between two consecutive layers. In these examples, the conductive veils do not completely overlap with the metal conductive layer 223. Resin may be used to fill the gap between the metal conductive layer 223 and the consecutive glass fiber pultrusion.

In some examples, the connecting portion may comprise a plurality of wires or fibers, copper wires and/or biaxial carbon fibers, protruding from the conductive veil. These wires or fibers may be arranged over the metal conductive layer 223 of the glass fiber stack.

In other examples, the conductive elements 222 may extend towards the carbon fiber stacks. For example, metal wires may extend from the glass fiber stack to the carbon fiber stack. The conductive elements 222 and the conductive veils may thus overlap and contact each other.

In this example, the width of the carbon fiber stack 230 is greater than the width of the glass fiber stack 220. The mechanical properties of the spar cap structure 210 may be improved. For example, the width of the carbon fiber stacks may be between 30 mm and 300 mm, e.g. between 100 mm and 200 mm, and the width of the glass fiber stacks between 20 mm and 130 mm, e.g. 25 - 100 mm.

In figure 4A, the glass fiber stack 220 is arranged at the trailing edge side of the spar cap structure 210. In other examples, the glass fiber stack 220 may be arranged at the leading edge side of the spar cap structure 210. In further examples, the glass fiber stack 220 may be arranged between two carbon fiber stacks.

In this example, a volume of conductive elements 222 in the glass fiber stack 220 is between 5% and 50% of a volume of glass fiber stack 220. For example, the volume of metal conductive elements may be between 5% and 20% of the total volume of the glass fiber stack 220. In this example, the thickness of the metal conductive layers 223 is between 0,5 and 3 mm. In this example, the thickness of layers of carbon fiber components corresponds to the thickness of the combination of the layer of one or more glass fiber components and one metal conductive layer 223.

Figure 4B schematically represents the cross-sectional view of the spar cap structure 210 of Figure 4A accommodating a lightning receptor. A lightning receptor 400 is inserted through the glass fiber stack 220. In this example, the lightning receptor 400 passes through the outer layer 201, the glass fiber stack 220 and the inner layer 202. The lightning receptor 400 comprises an elongated shape and extends between an outer end 401 and an inner end 402. The outer end 401 is arranged outside the wind turbine blade to capture lightning strikes. The inner end 402 of this example is in the inner cavity of the wind turbine blade. In this example, the outer end 401 comprises a diameter greater than a diameter of the inner end 402.

The lightning receptor 400 of this example is electrically coupled to a down conductor 410. The down conductor 410 extends in a direction substantially parallel to the lengthwise direction 37. The down conductor 410 may substantially extend to the entire length of the wind turbine blade 7. The down conductor 410 is configured to be electrically coupled to the ground so as to conduct lightning currents to the ground.

In this example, the down conductor 410 is supported by the web 340 of the first reinforcing beam 310. In other examples, the down conductor 410 may be coupled to the lower flange 330 or the upper flange of the first reinforcing beam 310.

In this example, a connector 420 electrically connects the lightning receptor 400 to the down conductor 410. One end of this connector 420 is attached to the inner end 402 of the lightning receptor 400, e.g. coiled around the inner end 402 of the lightning receptor 400. The opposite end of the connector 420 is attached to the down conductor 410.

As can be seen in Figure 4B, the lightning receptor 400 contacts the metal conductive layers 223 of the glass fiber stack 220. In this example, the connecting portion of the conductive veil 232 is also in contact with lightning receptor 400. A current path may thus be created towards the down conductor 410. Current flowing from the conductive veil 232 of the carbon fiber stacks may thus be conducted towards the down conductor 410 through the lightning receptor 400.

In some examples, the wind turbine blade 7 comprises a plurality of lightning receptors 400 accommodated in the glass fiber stack 220 of the spar cap structure 210. These lightning receptors 400 are electrically connected to the conductive elements 222. In some examples, the lightning receptors may further be in contact with the conductive veil 232. In some examples, each of these lightning receptors 400 is electrically coupled to the down conductor 410 through a specific connector 420.

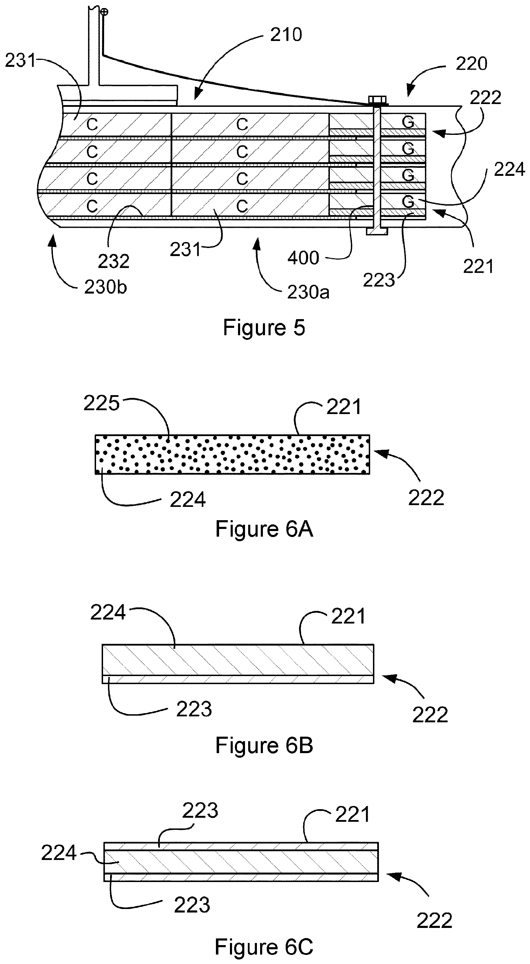

Figure 5 schematically represents a cross-sectional view of a portion of a spar cap structure 210 accommodating a lightning receptor 400 according to an example of the present disclosure. In this example, in addition to the conductive veils 232 arranged between two layers of carbon fiber components, e.g. pultrusions 231, a conductive veil 232 is arranged between the outer layer 201 and the outer layer of one or more carbon fiber components, i.e. the outermost layer. In this example, the layers of carbon fiber components comprise carbon fiber pultrusions 231. The carbon fiber component may thus be a carbon fiber pultrusion. In this figure, each row of carbon fiber pultrusions 231 of several carbon fiber stacks 230a, 230b is associated with a conductive veil 232.

Similarly, the glass fiber stack 220 comprises glass fiber pultrusions 221 associated with conductive elements 222. In this example, each metal conductive layer 223 is associated with a glass fiber pultrusion 221.

In this example, the metal conductive layer 223 forms part of the glass fiber pultrusion 221. The glass fiber pultrusions 221 of this example comprise a metal conductive layer 223 and a pultruded glass fiber portion 224. Each metal conductive layer 223 is joined to the corresponding pultruded glass fiber portion 224 to form a glass fiber pultrusion 221 with an integrated metal conductive layer 223. For example, the glass fiber pultrusions 221 may be made by pultruding together the metal conductive elements 222, e.g. a metal conductive layer 223, and the glass fibers. In further examples, the glass fiber pultrusions 221 may be made by infusing the metal conductive layers 223 with the pultruded glass fiber portion 224. The thickness of the metal conductive layer 223 may be between 0,5 mm and 3 mm.

In this figure, each conductive veil 232 extends along the width of the corresponding row of carbon fiber pultrusions 231 and along a portion of the width of the glass fiber stack 220. The conductive veils 232 of this example comprise a connecting portion extending a portion of the width of the glass fiber stack 220. The connection portion of these conductive veils 232 and the metal conductive layer 223 are thus partially overlapped. A portion of the conductive veil 232, i.e. the connecting portion, is thus in contact with a portion of the metal conductive layer 223. Each conductive veil 232 is thus electrically connected to the corresponding metal conductive layer 223. In this example, the connecting portion of the conductive veil 232 does not extend to the lightning receptor 400. However, an electrical path may be formed through the metal conductive layer 223.

In this example, the thickness of the carbon fiber pultrusions 231 is similar to the thickness of the glass fiber pultrusions 221 (including a metal conductive layer 223 and a pultruded glass fiber portion 224). For example, the thickness of the glass fiber pultrusion and of the carbon fiber pultrusion is between 3 and 6 mm, e.g. about 5 mm. The thickness of the conductive veil 232 is significantly lower than the thickness of the pultrusions. For example, the thickness of the conductive veil 232 may be less than 0,5 mm, e.g. 0,05 mm and 0,45 mm. Small gaps between the glass fiber pultrusions 221 may be filled with resin or with fabrics.

Figures 6A - 6C are examples of glass fiber pultrusions according to examples of the present disclosure. The glass fiber pultrusions 221 of these figures comprise a thickness between 3 and 6 mm, e.g. about 5 mm, and a width between 20 mm and 130 mm, e.g. about 50 mm.

In these figures, the conductive elements 222, e.g. metal conductive elements, are integrated within the glass fiber pultrusions 221. The glass fiber pultrusions 221 of these figures thus comprise conductive elements 222 and a pultruded glass fiber portion 224. The volume of the conductive elements 222 in the glass fiber pultrusion 221 is between 5% and 50% of the glass fiber pultrusion 221.

In figure 6A, the conductive elements 222 comprise metal conductive fibers 225 within the glass fiber pultrusion 221. The metal conductive fibers 225 may be unidirectional metal threads, e.g. unidirectional copper threads. The metal conductive fibers 225 and the glass fibers, e.g. unidirectional glass fibers, may be pultruded together to form glass fiber pultrusions with metal conductive fibers. In this example, the volume of metal conductive fibers 225 is between 5 and 25 % of the volume of the glass fiber pultrusion 221.

When arranged adjacent to carbon fiber stacks, the metal conductive fibers 225 of this pultrusion may be in contact with the conductive veils 232 of the carbon fiber stacks 230 so as to create an electrical path between the conductive veils 232 and the conductive elements 222. Similarly, the metal conductive fibers 225 may be in contact with the lightning receptors 400 when inserted into the glass fiber pultrusion 221.

The metal conductive element 222 of Figure 6B comprises a metal conductive layer 223. The thickness of the metal conductive layer 223 of this figure is between 10% and 50%, e.g. about 20%, of the thickness of the pultruded glass fiber portion 224. The thickness of the metal conductive layer 223 is between 0,5 and 3 mm, e.g. about 1 mm. For example, the glass fiber pultrusion 221 comprises a total thickness of about 5 mm corresponding to a thickness of about 1 mm of the metal conductive layer 223 and a thickness of about 4 mm for the pultruded glass fiber portion 224.

In Figure 6C, the metal conductive element 222 comprises an upper metal conductive layer 223 and a lower metal conductive layer 223. The pultruded glass fiber portion 224 is arranged between the upper and the lower metal conductive layer 223. The dimensions of the conductive layers of this figure may be similar to the dimensions described regarding Figure 6B. For example, each of the metal conductive layer 223 may comprise a thickness of about 1 mm and the thickness of the pultruded glass fiber portion 224 a thickness of about 3 mm.

The metal conductive layer arrangement of figures 6B and 6C improves the electrical connection of the conductive elements 222 to the conductive veil 232 and to the lightning receptor 400. The contact between the conductive elements 222 and the conductive veil 232 is simplified.

In some examples, the glass fiber pultrusions 221 of figures 6B and 6C are made by infusing the metal conductive layers 223 with the pultruded glass fiber portion 224. The pultruded glass fiber portion 224 may thus be first formed through a pultrusion process, and subsequently, joined to the metal conductive layer 223 to form the glass fiber pultrusion 221. In some examples, the glass fiber pultrusions 221 of figures 6B and 6C are made by pultruding together the metal conductive layers 223 and glass fibers.

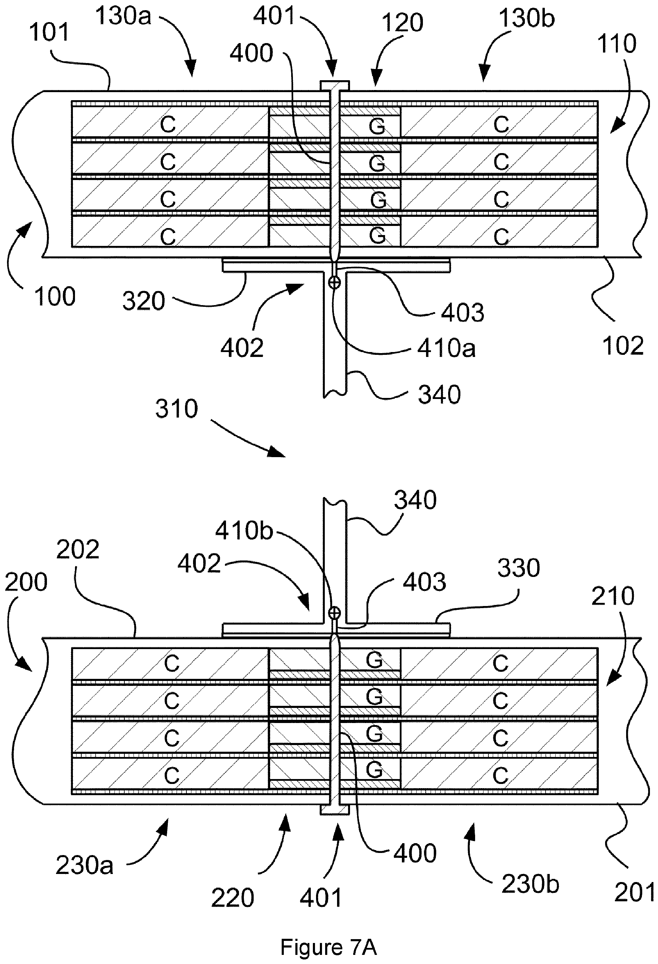

Figures 7A - 7C respectively represent a cross-sectional view of a portion of a wind turbine blade according to an example of the present disclosure.

In these figures, the upper spar cap structure 110 is arranged in the upper blade shell part 100 and the lower spar cap structure 210 is in the lower blade shell part 200. The spar cap structures 110, 210 are embedded between the outer layer 101,201 and the inner layer 102, 202. A reinforcing structure extends between the upper blade shell part 100 and the lower blade shell part 200. The reinforcing structure of this example comprises a first reinforcing beam 310 having a web 340 extending between an upper flange 320 and a lower flange 330. The upper flange 320 is joined, e.g. bonded, to the upper blade shell part 100 and the lower flange 330 to the lower blade shell part 200.

The spar cap structures 110, 210 of these figures comprise a plurality of carbon fiber stacks 130a, 130b, 230a, 230b and a glass fiber stack 120, 220. The carbon fiber stacks and the glass fiber stack may be according to any of the examples herein. In other examples, the spar cap structures 110, 210 may comprise fabrics forming layers of carbon fiber components and layers of glass fiber components. Fabrics may thus be an example of fiber components.

In these examples, the glass fiber stacks 120, 220 are arranged between two carbon fiber stacks 130a, 130b, 230a, 230b. The conductive veils of the carbon fiber stacks may be electrically connected to the conductive elements according to any of the examples herein. The conductive veils comprise a connecting portion extending to the glass fiber stack 120, 220. The connecting portion of the conductive veils is arranged on the conductive elements. The connecting portion of the conductive veil is thus in contact with the conductive elements.

In some examples, the connecting portion of the conductive veils extends a portion of the width of the glass fiber stack 120, 220. The connecting portion of the conductive veils of the carbon fiber stack 130a, 230a may extend to the connecting portion of the conductive veils of the carbon fiber stack 130b, 230b.

In some examples, the conductive veils may extend from the carbon fiber stack 130a, 230a to the carbon fiber stack 130b, 230b. The conductive veils may thus extend along the width of the spar cap structure 110, 210.

The glass fiber stack 120, 220 of these examples is aligned with the first reinforcing beam 310 so that the glass fiber stack 120,220 at least partially overlaps the first reinforcing beam 310. In these examples, the lightning receptor 400 is aligned with web 340 of the first reinforcing beam 310. In other examples, the lightning receptor 400 may be aligned with the flanges 320,330.

In these figures, the lightning receptors 400 extend from an outer end 401 outside the wind turbine blade to an inner end 402 inside the wind turbine blade. The outer end 401 comprises a disc shape. In this figure, one lightning receptor 400 is accommodated in the glass fiber stack 120 of the upper blade shell part 100 and another lightning receptor 400 is accommodated in the glass fiber stack 220 of the lower blade shell part 200. Although not depicted in these figures, several lightning receptors may be arranged along the lengthwise direction of the wind turbine blade.

Referring to Figure 7A, the down conductor comprises an upper down conductor branch 410a and a lower down conductor branch 410b. These down conductor branches 410a, 410b may be coupled at the root portion and/or at the tip portion of the wind turbine blade. In this figure, the upper down conductor branch 410a and the lower down conductor branch 410b extend a length inside the web 340 of the first reinforcing beam 310. The down conductor branches 410a, 410b may extend substantially along the whole length of the first reinforcing beam 310. In other examples, at least a portion of the down conductor may extend along the flanges of the first reinforcing beam. The down conductor may thus extend a length inside the reinforcing structure. The down conductor may thus be integrated within the reinforcing structure. For example, the down conductor, e.g. the upper down conductor branch 410a and the lower conductor branch 410b, may be infused together with the fibers that form the first reinforcing beam. Accordingly, the down conductor may be arranged inside the first reinforcing beam before being placed between the upper blade shell part 100 and the lower blade shell part 200. The manufacturing and assembly process may thus be simplified.

In addition, the wind turbine blade may comprise potential equalization connectors (not shown in Figure 7A) arranged at different locations along the lengthwise direction of the wind turbine blade that electrically connects the upper down conductor 410a to the lower down conductor branch 410b. These potential equalization connectors distributed along the blade may equalize the difference in voltage between the carbon pultrusion planks in the upper blade shell part 100 and carbon pultrusion planks in the lower blade shell part 200. This potential equalization connector may extend between the upper down conductor branch 410a to the lower down conductor branch 410b along the first reinforcing beam 310, e.g. along the web 340. The potential equalization connectors may also be arranged within the first reinforcing beam during the manufacturing process of the first reinforcing beam.

In this example, the inner end 402 of the lightning receptor 400 comprises a plug element 403 coupled to the down conductor. The plug element 403 arranged at the lower blade shell part 200 is coupled to the lower down conductor branch 410b and the plug element 403 at the upper blade shell part 100 is coupled to the upper down conductor branch 410a. The plug element 403 may engage the down conductor branch 410a, 410b.

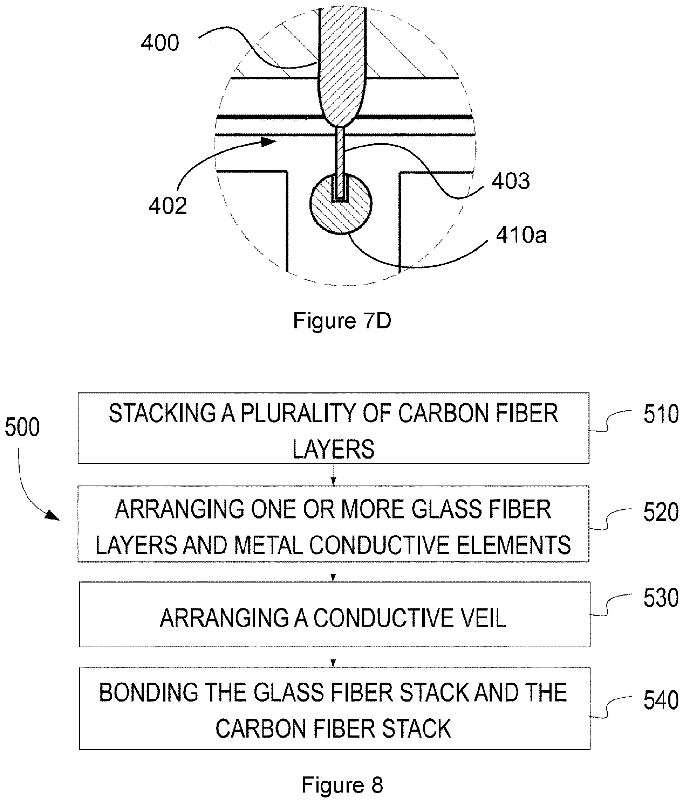

Figure 7D schematically represents a zoomed-in view of the connection of the plug element 403 with the upper down conductor branch 410a of Figure 7A. The connection of the plug element 403 with the lower down conductor branch 410b may be similar to the connection depicted in Figure 7D.

In this example, the plug element 403 fit a hole in the down conductor branch 410a. The hole may comprise an inner thread and the plug element 203 an outer thread to be threaded on the hole.

In some examples, the conductor branches 410a, 410b may comprise a plurality of holes arranged along the lengthwise direction of the wind turbine blade.

In some examples, the plug element 403 may be pressed against the hole of the conductor branch 410a, 410b. The conductor branches 410a, 410b may comprise a slot to receive the plug element 403.

The connection of the lightning receptors 400 to the down conductor 410 may be easily performed from outside the wind turbine blade in a post-molding operation. Installation of the lightning protection system may thus be simplified.

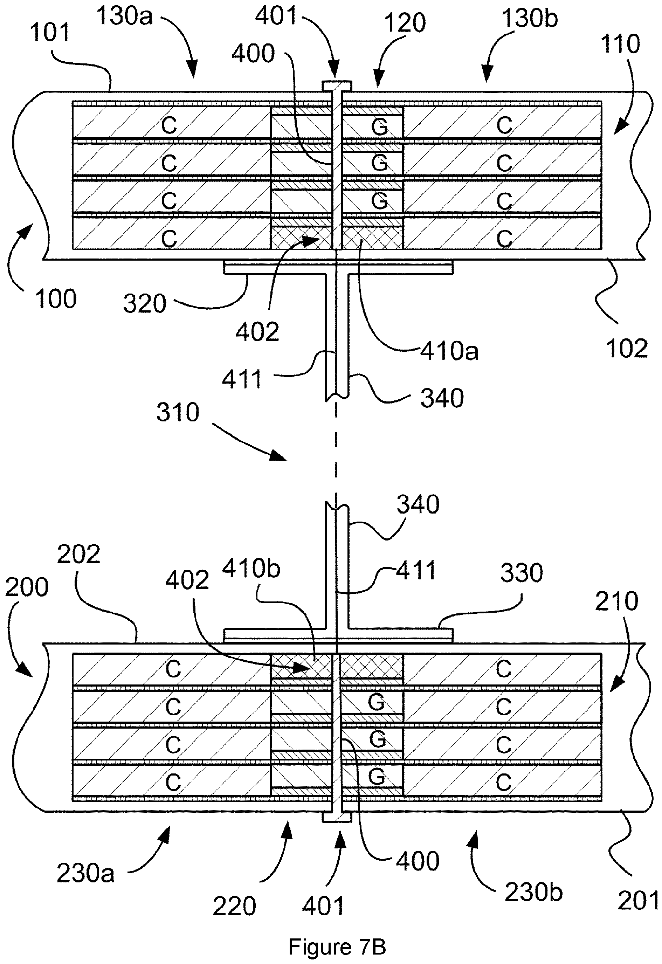

In figure 7B, the upper down conductor branch 410a is arranged within the upper spar cap structure 110 and the lower down conductor branch 410b is arranged within the lower spar cap structure 210. The down conductor thus extends a length within the spar cap structure. The down conductor branches may thus be encapsulated within the spar cap structure. Assembling of the down conductor may thus be simplified.

In this example, the down conductor branches 410a, 410b are arranged in the glass fiber stacks 120, 220. In this figure, the glass fiber stacks 120, 220 comprise glass fiber pultrusions having a metal conductive layer and a pultruded glass fiber portion. In addition, the glass fiber stacks 120, 220 comprise the corresponding down conductor branches 410a, 410b arranged at the innermost portion of the glass fiber stack 120, 220. The inner end 402 of the lightning receptor 400 is inserted in the down conductor branches 410a, 410b.

In this figure, a potential equalization connector 411 connects the upper down conductor branch 410a to the lower down conductor branch 410b. The wind turbine blade of this example further comprises a plurality of potential equalization connectors 411 arranged along the spanwise direction. The potential equalization connectors 411 extend inside the first reinforcing beam, e.g. from one flange to the opposite flange through the web.

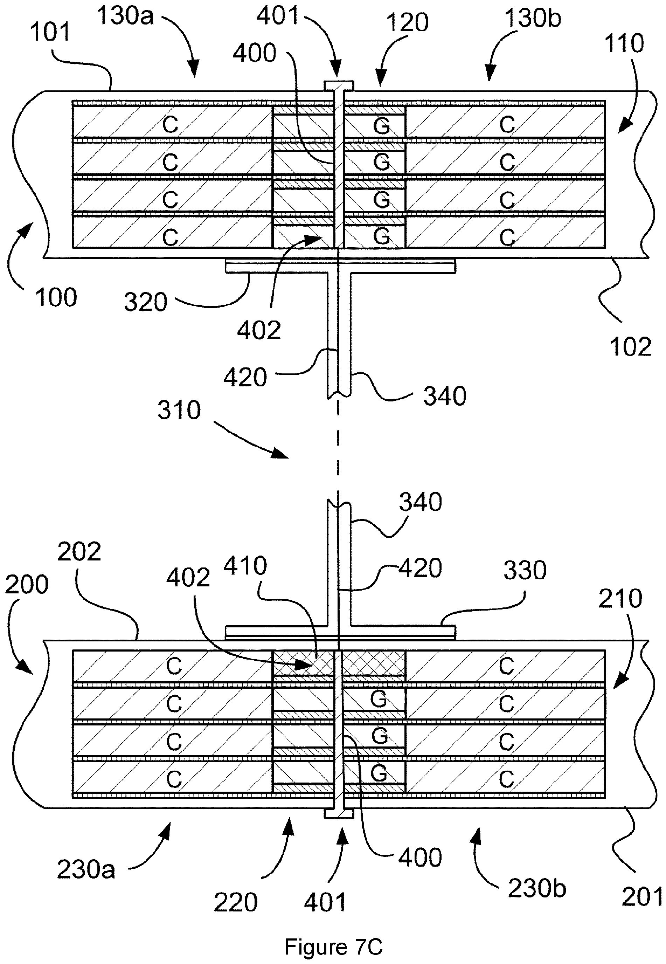

In figure 7C, the glass fiber stack 120 of the upper spar cap structure 110 is integrally formed from glass fiber pultrusions comprising a pultruded glass fiber portion and a metal conductor layer. However, the glass fiber stack 120 of the lower spar cap structure 210 comprises the down conductor 410. The down conductor 410 of this example is thus integrated into the lower spar cap structure 210. In other examples, the down conductor 410 is integrated into the upper spar cap structure 110.

The lightning receptor 400 of the upper blade shell 100 is electrically connected to the down conductor 410 through a connector 420. The connector 420 extends within the first reinforcing beam 310, e.g. through the web 340. The inner end 402 of the lightning receptor 400 of the upper blade shell part 100 is in contact with one end of the connector 420 and the opposite end is in contact with the down conductor arranged on the opposite blade shell part.

Figure 8 is a block diagram of a method for manufacturing a spar cap structure according to one example of the present disclosure. The method 500 may be employed for manufacturing spar cap structures 110, 210 according to any of the examples herein.

The method 500 comprises stacking a plurality of layers of one or more carbon fiber components, arranging one or more layers of one or more glass fiber components, and conductive elements adjacent to the layers of carbon fiber components and arranging a conductive veil between two consecutive rows of layers of carbon fiber components, as respectively represented at blocks 510, 520 and 530.

A plurality of layers of one or more carbon fiber components, e.g. a plurality of carbon fiber pultrusions 231, may be stacked to form rows of layers of carbon fiber components to form a carbon fiber stack 130, 230, as represented at block 510. In some examples, a plurality of carbon fiber stacks 130, 230 may be arranged side-by-side. In these examples, several carbon fiber pultrusions 231 may be arranged to form a row of carbon fiber pultrusions 231.

The method 500 comprises arranging one or more layers of one or more glass fiber components and conductive elements 222 adjacent to the layers of carbon fiber components to form a glass fiber stack 120, 220, as represented at block 520. The glass fiber components and the conductive elements are electrically connected. As explained above, the glass fiber stack 120, 220 is configured to accommodate a lightning receptor to be electrically connected to the conductive elements 222. In some examples, each layer of glass fiber components comprises a glass fiber pultrusion 221.

In some examples, forming the carbon fiber stack 130, 230 may comprise, first, laying a conductive veil 232, and then arranging a row of carbon fiber pultrusions 231. After that, the conductive veils 232 and the carbon fiber pultrusions 231 may be arranged as previously explained.

One conductive veil 232 is arranged between two consecutive rows of layers of carbon fiber components, as represented at block 530. The conductive veil 232 may be placed on top of a layer of one or more carbon fiber components, e.g. on top of the carbon fiber pultrusion 231.

In some examples, electrically connecting the conductive veil 232 and the conductive elements 222 comprises arranging the conductive veil 232 at least partially overlapping the conductive veil 232 and the conductive elements 222 so as to electrically connect the conductive elements of the glass fiber stack 120, 220 to the conductive veils 232 of the carbon fiber stack. A current path between the conductive veils 232 and the conductive elements 222 may thus be created through the contact between the conductive veil and the conductive elements 222.

In some examples, a layer of one or more carbon fiber components, e.g. fabrics or pultrusions, may be laid on a spar cap mold. For example, one or a plurality of carbon fiber pultrusions may be arranged in a row to form the carbon fiber layer. A layer of one or more glass fiber components may be laid adjacent to the layer of one or more carbon fiber components. For example, a layer of a glass fiber component may comprise a glass fiber pultrusion comprising a metal conductive layer 223. Then, the conductive veil 232 may be laid over the layer of one or more carbon fiber components and at least over a portion of the layer of one or more glass fiber components. The conductive veil 232 and the conductive elements 222 may thus overlap.

In some examples, the conductive veil 232 may be laid over the layer of one or more carbon fiber components and over the layer of one or more glass fiber components. The conductive veil 232 may thus extend along the whole width of the spar cap. After arranging the conductive veil 232, a layer of one or more carbon fiber components and a layer of one or more glass fiber components may be placed on top of the conductive veil 232.

The method may further comprise pultruding the glass fiber pultrusions 221. In some examples, manufacturing the glass fiber pultrusions 221 through a pultrusion process comprises pulling glass fibers and metal conductive fibers 225 through a heated stationary die and applying resin to these heated fibers to cure and obtain a glass fiber pultrusion with metal conductive fibers 225. The metal conductive fibers 225 may be arranged randomly along the cross-section of the glass fiber pultrusion 221. In other examples, the metal conductive fibers may be pulled through the heated die below and/or above the glass fibers so as to form a glass fiber pultrusion 221 with a pultruded glass fiber portion 224 and one or more metal conductive layers 223. In further examples, one or more prefabricated metal conductive layers 223 may be fed into the heated die with the glass fibers to form glass fiber pultrusions 221 with a pultruded glass fiber portion 224 and one or more metal conductive layers 223.

In other examples, the metal conductive layers 223 may be joined to pultruded glass fiber portions 224 to form glass fiber pultrusions 221. These pultruded glass fiber portions 224 may be substantially manufactured from glass fibers. The pultruded glass fiber portions 224 and the metal conductive layers 223 may be infused together.

In some examples, forming the glass fiber stack 120, 220 comprises stacking an electrical insulator element and the glass fiber pultrusions 221.

In some examples, a down conductor 410, 410a, 410b may be laid over the top of the glass fiber pultrusions.

The method 500 further comprises bonding the glass fiber stack 120, 220 and the carbon fiber stack 130, 230, as represented at block 540. Resin infusion or adhesive may be used for bonding the stacks.

In some examples, the spar cap structure 110, 210 is prefabricated before being placed over the blade shell part mold. In some of these examples, the glass fiber stacks 120,220 and the carbon fiber stacks 130,230 may be infused together to obtain a prefabricated spar cap structure. The pultrusions may be laid in a spar cap mold. Resin infusion may be used for bonding these stacks of pultrusions. Resin may thus be injected into the spar cap mold to fill the gaps between the pultrusions. Then, this resin is cured to form a prefabricated spar cap structure 110, 210. This may help to automatize the manufacturing process and arranging the stacks on the outer layer may be simplified. Accordingly, the spar cap structure 110, 210 may be prefabricated before being arranged on top of the outer layer 101, 201 placed on the blade mold. Furthermore, assembling the stacks and connecting the carbon fiber stacks to the glass fiber stacks may thus be simplified.

In other examples, the stacks may be directly placed on the blade shell part, e.g. over the outer layer of the blade shell part laid on the blade shell part mold. In these examples, the layers of the spar cap structure may be bonded together with the laminates of the blade shell part.

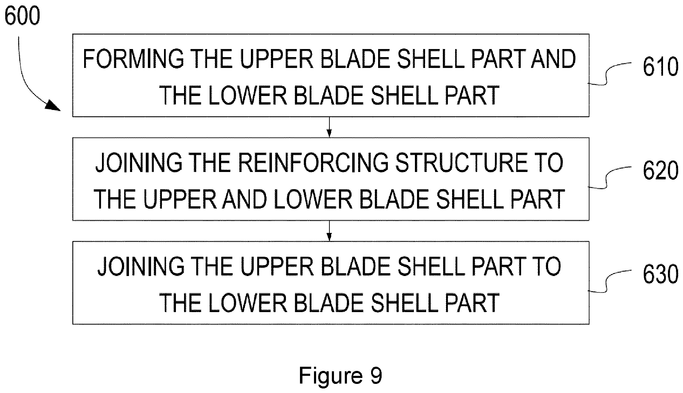

Figure 9 is a block diagram of a method for manufacturing a wind turbine blade according to one example of the present disclosure. The method 600 may be used for manufacturing a wind turbine blade according to any of the examples herein. These wind turbine blades include a spar cap structure 110, 210 according to any of the examples herein.

The method 600 comprises forming the upper blade shell part 100 and the lower blade shell part 200, as represented at block 610. Forming the upper blade shell part 100 and the lower blade shell part 200 comprises arranging the spar cap structure 110, 210 on an outer layer laid in a blade shell part mold and bonding the spar cap structure 110, 210 to the outer layer 201.

The method 600 may comprise laying the outer layer 101, 201 in a blade shell mold, e.g. laying one or more glass fiber laminates. These glass fiber laminates may comprise bidirectional glass fibers. The spar cap structure 110, 210 may then be laid on the outer layer 101, 201.

As previously explained, the spar cap structure 110, 210 may be pre-bonded or prefabricated before being arranged on top of the outer layer 101, 201. Alternatively, the glass fiber stack 120, 220 and the carbon fiber stacks 130, 230 may be directly arranged on top of the outer layer 101, 201. The spar cap structure may be manufactured according to any of the examples herein.

Then, the inner layer 102, 202 may be laid on top of the spar cap structure 110, 210.

The inner layer 102, 202 may comprise one or more glass fiber laminates, e.g. having bidirectional glass fibers.

In some examples, a core structure or a plurality of core structures may be placed adjacent to the spar cap structure 110, 210. The inner layer may be placed on top of these core structures.

The spar cap structure 110, 210 (prefabricated or directly arranged on top of the outer layer) may be bonded to the outer layer 101, 201 and to the inner layer 102, 202 to form the blade shell part 100, 200. In some examples, bonding the spar cap structure 110, 210 to the outer layer 101, 201 and to the inner layer 102, 202 comprises molding the inner layer, the spar cap structure and the outer layer together with a resin infusion technology. Once the inner layer covers the spar cap structure and the outer layer, resin is injected into the mold cavity under pressure. This resin fills the volume between the stacks and the layers. Then, the resin is cured or hardened. Accordingly, the spar cap structure may be bonded to the inner layers and to the outer layers by using a resin infusion process. After curing, a blade shell part may be obtained.

The method 600 further comprises joining the reinforcing structure 300 to the upper blade shell part 100 and to the lower blade shell part 200 such that the reinforcing structure 300 is arranged between the upper blade shell part 100 and the lower blade shell part 200, as represented at block 620. The first reinforcing beam 310 may thus be joined to the upper and to the lower blade shell parts. The lower flange 330 of the first reinforcing beam 310 may be joined to the lower blade shell part 200 and the upper flange 320 of the first reinforcing beam 310 to the upper blade shell part 100.

Joining the flanges 320, 330 with the corresponding blade shell parts 100, 200 may comprise adhering or bonding the flanges 320, 330 to the corresponding inner layers 102, 202 of the blade shell parts 100, 200. An adhesive layer may thus be formed between the flanges 320, 330 and the inner layers 102, 202.

In some examples, the glass fiber stack 120, 220 of the spar cap structure 110, 210 may be arranged in a position to be aligned with the first reinforcing beam 310. For example, the glass fiber stack may be aligned with the web 340.

At block 630, joining the upper blade shell part 100 to the lower blade shell part 200 is represented. The blade shell parts may be bonded together through bonding lines formed at the leading edge 53 and at the trailing edge 54.

In some examples, the method 600 further comprises inserting a plurality of lightning receptors in the glass fiber stack 120, 220. The lightning receptors 400 may be positioned at different locations of the wind turbine blade along the spanwise direction 37. In some examples, the lightning receptors 400 may be arranged at both the upper blade shell part 100 and the lower blade shell part 200. Before inserting the lightning receptors 400, an aperture may be drilled on the glass fiber stack 120.

In some examples, the inner end 402 of the lightning receptor 400 may be connected to the down conductor 410, 410a, 410b. The inner end 402 may comprise a plug element 403 that may be fitted in a receiver formed on the down conductor 410, 410a, 410b.

In further examples, a connector 420 may be coupled with the inner end 402 of the lightning receptor 400 and to the down conductor 410.

In some examples, the method may further comprise connecting potential equalization connectors 411 between two down conductors, e.g. the down conductor branch 410a integrated within the upper spar cap structure 110 and the down conductor branch 410b integrated within the lower spar cap structure 210.

For reasons of completeness, various aspects of the present disclosure are set out in the following numbered clauses:
Clause 1: A spar cap structure for a wind turbine blade, the spar cap structure comprising:
   a carbon fiber stack comprising:
      a plurality of layers of one or more carbon fiber components arranged one on top of the other forming rows of layers of one or more carbon fiber components; and
      one or more conductive veils arranged between two consecutive rows of the layers of one or more carbon fiber components; and
   a glass fiber stack comprising:
      one or more layers of one or more glass fiber components;
      conductive elements electrically connected to the conductive veils of the carbon fiber stack; and
      wherein the glass fiber stack is configured to accommodate a lightning receptor to be electrically connected to the conductive elements.
Clause 2: The spar cap structure according to clause 1, wherein the plurality layers of one or more carbon fiber components comprise a plurality of carbon fiber pultrusions.
Clause 3: The spar cap structure according to any of clauses 1 - 2, wherein the plurality layers of glass fiber components comprise a plurality of glass fiber pultrusions.
Clause 4: The spar cap structure for a wind turbine blade according to any of clauses 1-3, wherein the one or more conductive veils and the conductive elements are at least partially overlapped.
Clause 5: The spar cap structure for a wind turbine blade according to clause 4, wherein the conductive veils comprise a connecting portion extending towards the glass fiber stack to at least partially overlap the conductive elements.
Clause 6: The spar cap structure according to any of clauses 1 - 5, wherein a volume of conductive elements in the glass fiber stack is between 5% and 50% of a volume of the glass fiber stack.
Clause 7: The spar cap structure according to any of clauses 1 - 6, wherein the conductive elements comprise metal conductive fibers within the layers of one or more glass fiber components.
Clause 8: The spar cap structure according to any of clauses 1 - 7, wherein the conductive elements comprise metal conductive layers.
Clause 9: The spar cap structure according to clause 7, wherein each of the layers of one or more glass fiber components comprises a glass fiber pultrusion, and wherein each of the glass fiber pultrusions comprises one or more metal conductive layers and a pultruded glass fiber portion.
Clause 10: The spar cap structure according to clause 9, wherein the thickness of the metal conductive layers is between 10% and 50% of the thickness of the glass fiber pultrusion.
Clause 11: The spar cap structure according to any of clauses 9 - 10, wherein the glass fiber pultrusions comprise a thickness between 3 and 6 mm, and wherein the thickness of the metal conductive layers of each glass fiber pultrusion comprises a thickness between 0.5 mm and 3 mm.
Clause 12: The spar cap structure according to clause 11, wherein the thickness of the conductive veils of the carbon fiber stack is less than 0.5 mm.
Clause 13: The spar cap structure according to any of clauses 8 - 12, wherein each of the metal conductive layers of the glass fiber stack is at least partially overlapped by a connecting portion of one of the conductive veils of the carbon fiber stack.
Clause 14: The spar cap structure according to any of clauses 8 - 13, wherein the glass fiber pultrusions are made by infusing the metal conductive layers with the pultruded glass fiber portion.
Clause 15: The spar cap structure according to any of clauses 8 - 13, wherein the glass fiber pultrusions are made by pultruding together conductive elements and glass fibers.
Clause 16: A wind turbine blade extending in a lengthwise direction, the wind turbine blade comprising:
   an upper blade shell part
   a lower blade shell part joined to the upper blade shell part;
   a reinforcing structure between the upper blade shell part and the lower blade shell; and
   wherein the upper blade shell part and/or the lower blade shell part comprises a spar cap structure according to any of clauses 1 - 15.
Clause 17: The wind turbine blade according to clause 16, comprising a plurality of lightning receptors accommodated in the glass fiber stack and electrically connected to the conductive elements of the glass fiber stack.
Clause 18: The wind turbine blade according to clause 17, comprising a down conductor extending in a direction substantially parallel to the lengthwise direction, wherein the down conductor is configured to be electrically coupled to the ground, and wherein the plurality of lightning receptors is electrically coupled to the down conductor.
Clause 19: The wind turbine blade according to clause 18, wherein the down conductor extends a length inside the reinforcing structure and/or inside the glass fiber stack.
Clause 20: The wind turbine blade according to clause 19, wherein reinforcing structure comprises a first reinforcing beam and wherein the glass fiber stack is aligned with the first reinforcing beam so that the glass fiber stack at least partially overlaps the first reinforcing beam.
Clause 21: The wind turbine blade according to clause 20, wherein the plurality of lightning receptors comprises an inner end having a plug element coupled to the down conductor.
Clause 22: A method for manufacturing a spar cap structure comprising:
   stacking a plurality of layers of one or more carbon fiber components to form rows of layers of one or more carbon fiber components to from a carbon fiber stack;
   arranging one or more layers of one or more glass fiber components, and conductive elements adjacent to the layers of one or more carbon fiber components to form a glass fiber stack, wherein the glass fiber stack is configured to accommodate a lightning receptor to be electrically connected to the conductive elements;
   arranging a conductive veil between two consecutive rows of layers of one or more carbon fiber components, and electrically connecting the conductive elements of the glass fiber stack to the conductive veils of the carbon fiber stack, and
   bonding the glass fiber stack and the carbon fiber stack.
Clause 23: A method for manufacturing a spar cap structure according to clause 22, wherein electrically connecting the conductive elements of the glass fiber stack to the conductive veils of the carbon fiber stack comprises arranging the conductive veil at least partially overlapping the conductive veil and the conductive elements.
Clause 24: A method for manufacturing a wind turbine blade according to any of clauses 16 - 21, comprising:
   forming the upper blade shell part and the lower blade shell part, wherein forming the upper blade shell part and/or the lower blade shell part comprises:
      arranging the spar cap structure on an outer layer laid in a blade shell part mold; and
      bonding the spar cap structure to the outer layer;
   joining the reinforcing structure to the upper blade shell part and to the lower blade shell part such that the reinforcing structure is arranged between the upper blade shell part and the lower blade shell part, and
   joining the upper blade shell part to the lower blade shell part.
Clause 25: A method for manufacturing a wind turbine blade according to clause 24, comprising inserting a plurality of lightning receptors in the glass fiber stack.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A spar cap structure (110, 210) for a wind turbine blade (7), the spar cap structure (110, 210) comprising:
a carbon fiber stack (230, 230a, 230b, 230c) comprising:
a plurality of layers of one or more carbon fiber components arranged one on top of the other forming rows of layers of one or more carbon fiber components; and
one or more conductive veils (232) arranged between two consecutive rows of the layers of one or more carbon fiber components; and
a glass fiber stack (220) comprising:
one or more layers of one or more glass fiber components;
conductive elements (222) electrically connected to the conductive veils (232) of the carbon fiber stack (230,230a, 230b, 230c); and
wherein the glass fiber stack (220) is configured to accommodate a lightning receptor (400) to be electrically connected to the conductive elements (222).

2. The spar cap structure (110, 210) according to claim 1, wherein the plurality of layers of one or more carbon fiber components comprises a plurality of carbon fiber pultrusions (231).

3. The spar cap structure (110, 210) according to any of claims 1 - 2, wherein the one or more layers of one or more glass fiber components comprise one or more glass fiber pultrusions (221).

4. The spar cap structure (110, 210) according to any of claims 1-3, wherein the one or more conductive veils (232) and the conductive elements (222) are at least partially overlapped.

5. The spar cap structure (110, 210) for a wind turbine blade (7) according to claim 4, wherein the conductive veils (232) comprise a connecting portion extending towards the glass fiber stack (220) to at least partially overlap the conductive elements.

6. The spar cap structure (110, 220) according to any of claims 1-5, wherein the conductive elements (222) comprise metal conductive fibers within the layers of glass fiber components.

7. The spar cap structure (110, 220) according to any of claims 1-6, wherein the conductive elements (222) comprise metal conductive layers (223).

8. The spar cap structure (110, 220) according to claim 7, wherein each of the layers of one or more glass fiber components comprises a glass fiber pultrusion (221), and wherein each glass fiber pultrusion (221) comprises one or more metal conductive layers (223) and a pultruded glass fiber portion (224).

9. The spar cap structure (110, 220) according to any of claims 7-8, wherein each of the metal conductive layers (223) of the glass fiber stack (220) is at least partially overlapped by a connecting portion of the one of the conductive veils (232) of the carbon fiber stack (230,230a, 230b, 230c).

10. A wind turbine blade (7) extending in a lengthwise direction, the wind turbine blade comprising:
an upper blade shell part (100);
a lower blade shell part (200) joined to the upper blade shell part (100);
a reinforcing structure (300) between the upper blade shell part (100) and the lower blade shell part (200); and
wherein the upper blade shell part (100) and/or the lower blade shell part (200) comprises a spar cap structure (110, 220) according to any of claims 1 - 9.

11. The wind turbine blade (7) according to claim 10, comprising a plurality of lightning receptors (400) accommodated in the glass fiber stack (120, 220) and electrically connected to the conductive elements (222) of the glass fiber stack (120, 220).

12. The wind turbine blade (7) according to claim 11, comprising a down conductor (410, 410a, 410b) extending in a direction substantially parallel to the lengthwise direction (37), wherein the down conductor (410, 410a, 410b) is configured to be electrically coupled to the ground, and wherein the plurality of lightning receptors (400) is electrically coupled to the down conductor (410, 410a, 410b).

13. The wind turbine blade (7) according to claim 12, wherein the down conductor (410, 410a, 410b) extends a length inside the reinforcing structure (300) and/or inside the glass fiber stack (120, 220).

14. A method (500) for manufacturing a spar cap structure (110, 210) comprising:
stacking (510) a plurality of layers of one or more carbon fiber components to form rows of layers of one or more carbon fiber components to form a carbon fiber stack (130, 230); and
arranging (520) one or more layers of one or more glass fiber components, and conductive elements (222) adjacent to the layers of carbon fiber components to form a glass fiber stack (120, 220), wherein the glass fiber stack (120, 220) is configured to accommodate a lightning receptor (400) to be electrically connected to the conductive elements (222);
arranging (530) a conductive veil (232) between two consecutive rows of layers of one or more carbon fiber components, and electrically connecting the conductive elements (222) of the glass fiber stack (120, 220) to the conductive veils (232) of the carbon fiber stack (130, 230); and
bonding (540) the glass fiber stack (120, 220) and the carbon fiber stack (130, 230).

15. A method (600) for manufacturing a wind turbine blade (7) according to any of claims 10 - 13, comprising:
forming (610) the upper blade shell part (100) and the lower blade shell part (200), wherein forming the upper blade shell part (100) and/or the lower blade shell part (200) comprises:
arranging the spar cap structure (110, 210) on an outer layer (101, 201) laid in a blade shell part mold; and
bonding the spar cap structure (110, 210) to the outer layer (101, 201);
joining (620) the reinforcing structure (300) to the upper blade shell part (100) and to the lower blade shell part (200) such that the reinforcing structure (300) is arranged between the upper blade shell part (100) and the lower blade shell part (200),
joining (630) the upper blade shell part (100) to the lower blade shell part (200); and
inserting a plurality of lightning receptors (400) in the glass fiber stack (120, 220).
